# EUROPEAN PATENT APPLICATION

(11) **EP 3 917 194 A1**
(43) Date of publication of application: **01.12.2021**
(21) Application number: 20745508.0
(22) Date of filing: 21.01.2020
(51) Int. Cl.: H04W 16/18, H04W 16/28, H04W 24/02, H04W 24/08, H04W 24/10, H04W 72/04

(54) **INFORMATION REPORTING METHOD AND RECEIVING METHOD, APPARATUS AND DEVICE**

(30) Priority: 25.01.2019 CN 201910075154
(71) Applicant: Datang Mobile Communications Equipment Co., Ltd., Beijing 100083 (CN)
(72) Inventor: FU, Jing, Beijing 100191 (CN); YAN, Nan, Beijing 100191 (CN); LIANG, Jing, Beijing 100191 (CN)
(74) Representative: Studio Torta S.p.A.
(86) International application number: PCT/CN2020/073478
(87) International publication number: WO 2020/151699

(57) **Abstract**

An information reporting method and receiving method, apparatus and device are disclosed. The information reporting method includes: logging, by UE in a non-connected state, beam-level relevant information; reporting, by the UE, the beam-level relevant information to a network device.

## Description

### CROSS-REFERENCE TO RELATED APPLICATION

The present application claims a priority to the Chinese patent application No. 201910075154.X filed in China on January 25, 2019, a disclosure of which is incorporated herein by reference in its entirety.

### TECHNICAL FIELD

The present disclosure relates to the field of communication technology, in particular to an information reporting method and receiving method, apparatus and device.

### BACKGROUND

In order to reduce an operation and maintenance cost of network, it is desired to adopt a method for configuring user equipment (UE) reporting by a network, to reduce effort spent on manual drive tests. On the other hand, it also desired to obtain radio measurement information of a region to which a common drive test has no access.

Based on the above reasons, minimization of drive tests (MDT) was introduced in Long Term Evolution (LTE). In the same way, New Radio (NR or 5G) networks require an automatic network optimization scheme, including logging downlink (DL) coverage by UE to assist a network side in performing DL coverage optimization.

MDT in the related art continues to use the trace function. Depending on whether an element management (EM) participates in the selection of the particular UE involving in the MDT, and depending on a manner of reporting an MDT result, MDT is further divided into two categories.

1) For Logged MDT, UE obtains logged MDT configuration through dedicated signaling in a radio resource control (RRC) connected state. Having entered an idle state, the UE collects MDT measurement results, and the UE reports the collected results to the network side in a subsequent connected state. Once a configured trigger condition (conventionally, only periodic collection of results is supported) is met, the UE obtains and stores (or logs) a measurement result, and reports the same to an eNB (evolved Node B or base station)/radio network controller (RNC) at a subsequent appropriate occasion.

In LTE, to support DL coverage optimization, the network side notifies UE of relevant Logged MDT configuration through a dedicated RRC message. The configuration information includes: collection interval: the periodicity of logging the logged MDT results; collection duration: it defines a time duration in which the MDT configuration remains valid after the MDT configuration is sent to UE.

Optionally, the configuration information further includes: a logging area configured by the network, such as a cell list or tracking area (TA) list, where the UE only performs the logging measurement when in the logging area; trace collection entity (TCE) identifier corresponding to the collected result reporting, which is used for subsequent data processing of TCE.

After entering the idle state, the UE then logs DL coverage information periodically based on the collection interval. The DL coverage information includes: identifiers of a serving cell and neighboring cells, corresponding signal strengths and signal qualities; time stamp information: it indicates the time when the logging occurs; location information: it indicates the location where the logging occurs.

2) For Immediate MDT, MDT measurement and reporting performed by UE in the connected state. MDT measurement quantity collected by UE and the MDT measurement quantity obtained by a base station statistically are included.

An NR base station supports signal transmission in a manner of multibeam sweeping. When measuring a certain cell, UE obtains multiple beam-level measurement results of the cell, and the UE should be able to calculate a cell-level measurement result based on one or more beam-level measurement results.

In order to assist a network side in a handover, and assist a target cell in configuring appropriate RACH resources, in addition to the reporting of the cell-level measurement result, a connected-state UE needs to carry a beam-level measurement result in a measurement report according to the requirement configured by the network side. An L3 filtering of both the cell-level measurement result and the beam-level measurement result according to a network side configuration is required to obtain a final L3 measurement result.

In NR, when performing a cell reselection, an idle-state/inactive-state UE adopts a cell-level measurement result obtaining rule same as that adopted by the connected-state UE; a cell-level measurement result obtaining rule for the idle-state/inactive-state UE in performing a cell selection is not specified. In addition, in conventional protocols, an L3 filtering of the cell-level measurement result performed by a non-connected-state UE is not specified, and an L3 filtering of the beam-level measurement result provided by L1 is not required.

An NR network differs from an LTE network in some respects. A solution as to how to collect downlink (DL) coverage information in NR to assist a network in optimizing DL coverage is not discussed in the related art.

### SUMMARY

Some embodiments of the present disclosure provide an information reporting method and receiving method, apparatus and device. UE reports beam-level relevant information to a network side, to assist the network side in optimizing DL coverage.

To solve the above technical problem, some embodiments of the present disclosure provide following technical solutions.

An information reporting method is applied to user equipment (UE) and includes: logging, by the UE in a non-connected state, beam-level relevant information; reporting, by the UE, the beam-level relevant information to a network device.

The logging, by the UE, the beam-level relevant information includes at least one of: logging, by the UE, the beam-level relevant information periodically; logging, by the UE, the beam-level relevant information when the UE exits a coverage area; logging, by the UE, the beam-level relevant information when the UE re-enters the coverage area after exiting the coverage area.

The logging, by the UE, the beam-level relevant information when the UE exits the coverage area includes at least one of: logging a number of times the UE exits the coverage area, logging a time when the UE exits the coverage area, and logging flag information about the UE's exiting the coverage area; the logging, by the UE, the beam-level relevant information when the UE re-enters the coverage area after exiting the coverage area includes at least one of: logging a number of times the UE re-enters the coverage area after exiting the coverage area, logging a time when the UE re-enters the coverage area, and logging flag information about the UE's re-entering the coverage area, a serving cell or detectable cell, and beam-level relevant information of the serving cell or detectable cell.

The beam-level relevant information includes at least one of: a beam identifier; a beam-level measurement result provided by layer-1; a layer-3-filtered beam-level measurement result; the number n of beams actually used in obtaining a cell-level measurement result.

The beam-level measurement result includes at least one of: a beam-level measurement result corresponding to a serving cell; a beam-level measurement result corresponding to the serving cell and a neighboring cell; the beam-level measurement result exceeding a preset threshold; top k beam-level measurement results, ranked according to the measurement result, with a value exceeding a preset value; all detected beam-level measurement results.

The beam identifier includes at least one of: a beam identifier corresponding to a beam-level measurement result of a serving cell; a beam identifier corresponding to a beam-level measurement result of the serving cell and a neighboring cell; a beam identifier corresponding to the beam-level measurement result exceeding a preset threshold; beam identifiers corresponding to top k beam-level measurement results, ranked according to the measurement result, with a value exceeding a preset value; beam identifiers corresponding to all detected beam-level measurement results.

The logging, by the UE, the beam-level relevant information includes: logging, by the UE, the beam-level relevant information according to configuration information of the network device.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged.

The reporting, by the UE, the beam-level relevant information to the network device includes: transmitting, by the UE, the beam-level relevant information to the network device when the UE transitions from the non-connected state to a connected state.

The transmitting the beam-level relevant information to the network device includes: transmitting the beam-level relevant information to the network device when a report request transmitted by the network device is received; or, transmitting to the network device an indication indicating that the beam-level relevant information is available, or reporting to the network device an indication indicating that a coverage problem is available; and transmitting the beam-level relevant information to the network device when a report request transmitted by the network device in response to the indication is received.

The transmitting to the network device the indication indicating that the beam-level relevant information is available, or reporting to the network device the indication indicating that the coverage problem is available includes: transmitting to the network device the indication indicating that the beam-level relevant information is available or reporting to the network device the indication indicating that the coverage problem is available through a radio resource control (RRC) connection establishment complete message, an RRC connection recovery complete message, an RRC connection reestablishment complete message or a new RRC message.

Some embodiments of the present disclosure further provide an information receiving method, applied to a network device, including: transmitting configuration information to UE, transmitting a report request for beam-level relevant information to UE, and/or receiving an indication transmitted by the UE indicating that the beam-level relevant information is available or an indication reported by the UE indicating that a coverage problem is available; receiving the beam-level relevant information reported by the UE in a non-connected state.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged.

Some embodiments of the present disclosure further provide UE, including a processor, a transceiver, a memory and a program stored in the memory and executable by the processor, wherein the processor is configured to execute the program to implement: logging beam-level relevant information; the transceiver is configured to report the beam-level relevant information to a network device.

The processor is specifically configured to implement at least one of: logging the beam-level relevant information periodically; logging the beam-level relevant information when the UE exits a coverage area; logging the beam-level relevant information when the UE re-enters the coverage area after exiting the coverage area.

The logging the beam-level relevant information when the UE exits the coverage area includes at least one of: logging a number of times the UE exits the coverage area, logging a time when the UE exits the coverage area, and logging flag information about the UE's exiting the coverage area; the logging the beam-level relevant information when the UE re-enters the coverage area after exiting the coverage area includes at least one of: logging a number of times the UE re-enters the coverage area after exiting the coverage area, logging a time when the UE re-enters the coverage area, and logging flag information about the UE's re-entering the coverage area, a serving cell or detectable cell, and beam-level relevant information of the serving cell or detectable cell.

The beam-level relevant information includes at least one of: a beam identifier; a beam-level measurement result provided by layer-1; a layer-3-filtered beam-level measurement result; the number n of beams actually used in obtaining a cell-level measurement result.

The beam-level measurement result includes at least one of: a beam-level measurement result corresponding to a serving cell; a beam-level measurement result corresponding to the serving cell and a neighboring cell; the beam-level measurement result exceeding a preset threshold; top k beam-level measurement results, ranked according to the measurement result, with a value exceeding a preset value; all detected beam-level measurement results.

The beam identifier includes at least one of: a beam identifier corresponding to a beam-level measurement result of a serving cell; a beam identifier corresponding to a beam-level measurement result of the serving cell and a neighboring cell; a beam identifier corresponding to the beam-level measurement result exceeding a preset threshold; beam identifiers corresponding to top k beam-level measurement results, ranked according to the measurement result, with a value exceeding a preset value; beam identifiers corresponding to all detected beam-level measurement results.

The transceiver is configured to receive the configuration information transmitted by the network device; the processor is configured to log the beam-level relevant information according to the configuration information of the network device.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged.

The transceiver is configured to transmit the beam-level relevant information to the network device when the UE transitions from the non-connected state to a connected state.

The transceiver is configured to transmit the beam-level relevant information to the network device when a report request transmitted by the network device is received; or, the transceiver is configured to transmit to the network device an indication indicating that the beam-level relevant information is available, or report to the network device an indication indicating that a coverage problem is available; and transmit the beam-level relevant information to the network device when a report request transmitted by the network device in response to the indication is received.

When transmitting to the network device the indication indicating that the beam-level relevant information is available or reporting to the network device the indication indicating that the coverage problem is available, the transceiver is configured to transmit to the network device the indication indicating that the beam-level relevant information is available or report to the network device the indication indicating that the coverage problem is available through a radio resource control (RRC) connection establishment complete message, an RRC connection recovery complete message, an RRC connection reestablishment complete message or a new RRC message.

Some embodiments of the present disclosure further provide an information reporting apparatus, applied to UE in a non-connected state, including: a processing module, configured to log beam-level relevant information; a transceiver module, configured to report the beam-level relevant information to a network device.

The processing module is specifically configured to implement at least one of: logging the beam-level relevant information periodically; logging the beam-level relevant information when the UE exits a coverage area; logging the beam-level relevant information when the UE re-enters the coverage area after exiting the coverage area.

The transceiver module is specifically configured to transmit the beam-level relevant information to the network device when the UE transitions from the non-connected state to a connected state.

The transceiver module is specifically configured to: transmit the beam-level relevant information to the network device when a report request transmitted by the network device is received; or, transmit to the network device an indication indicating that the beam-level relevant information is available, or report to the network device an indication indicating that a coverage problem is available; and transmit the beam-level relevant information to the network device when a report request transmitted by the network device in response to the indication is received.

Some embodiments of the present disclosure further provide a network device, including a processor, a transceiver, a memory and a program stored in the memory and executable by the processor, wherein the processor is configured to execute the program to implement at least one of: transmitting configuration information to UE, transmitting a report request for beam-level relevant information to UE, receiving an indication transmitted by the UE indicating that the beam-level relevant information is available or an indication reported by the UE indicating that a coverage problem is available; and the processor is configured to execute the program to implement: receiving the beam-level relevant information reported by the UE in a non-connected state.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged.

Some embodiments of the present disclosure further provide an information receiving apparatus, applied to a network device, including: a transceiver module, configured to implement at least one of: transmitting configuration information to UE, transmitting a report request for beam-level relevant information to UE, receiving an indication transmitted by the UE indicating that the beam-level relevant information is available or an indication reported by the UE indicating that a coverage problem is available; where the transceiver module is further configured to receive the beam-level relevant information reported by the UE in a non-connected state.

Some embodiments of the present disclosure further provide a computer storage medium including an instruction, wherein the instruction is configured to be executed by a computer to cause the computer to implement the aforementioned methods.

Some embodiments of the present disclosure have following beneficial effects: in the above embodiments of the present disclosure, UE in the non-connected state logs and reports beam-level relevant information to the network side, such that the network side may perform DL coverage optimization, especially the beam-level DL coverage optimization, according to the beam-level relevant information.

### BRIEF DESCRIPTION OF THE DRAWINGS

Fig.1 is a flow diagram of an information reporting method according to some embodiments of the present disclosure;
Fig.2 is a schematic diagram of an architecture of user equipment according to some embodiments of the present disclosure.

### DETAILED DESCRIPTION

Hereinafter, the exemplary embodiments of the present disclosure are described in detail with reference to the accompanying drawings. Although the exemplary embodiments of the present disclosure are illustrated in the accompanying drawings, the disclosure may, however, be embodied in many different forms and should not be construed as being limited to the embodiments set forth herein. Rather, these embodiments are provided so that the present disclosure will be thorough, and will fully convey the scope of the present disclosure to those skilled in the art.

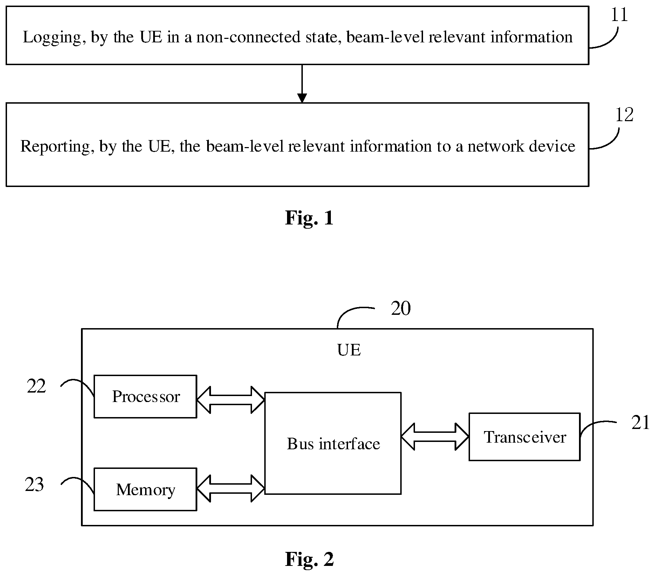

As shown in Fig.1, some embodiments of the present disclosure provide an information reporting method. The method is applied to UE and includes:
step 11, logging, by the UE in a non-connected state, beam-level relevant information; here, the beam-level relevant information is some information related to beams when a signal is transmitted in a manner of beam sweeping;
step 12, reporting, by the UE, the beam-level relevant information to a network device.

In the embodiment, UE in the non-connected state logs (records) and reports beam-level relevant information to the network side, such that the network side may perform DL coverage optimization, especially the beam-level DL coverage optimization, according to the beam-level relevant information.

In the embodiment, the step 11 may specifically include at least one of: 111), logging, by the UE, the beam-level relevant information periodically; 112), logging, by the UE, the beam-level relevant information when the UE exits a coverage area, specifically, at least one of: logging a number of times the UE exits the coverage area, logging a time when the UE exits the coverage area, and logging flag information about the UE's exiting the coverage area; 113), logging, by the UE, the beam-level relevant information when the UE re-enters the coverage area after exiting the coverage area.

Specifically, the logging, by the UE, the beam-level relevant information when the UE re-enters the coverage area after exiting the coverage area includes at least one of: logging a number of times the UE re-enters the coverage area after exiting the coverage area, logging a time when the UE re-enters the coverage area, and logging flag information about the UE's re-entering the coverage area, a serving cell or detectable cell, and beam-level relevant information of the serving cell or detectable cell.

In some embodiments of the present disclosure, the beam-level relevant information includes at least one of: A), a beam identifier; B), a beam-level measurement result provided by layer-1 (i.e., L1); C), a layer-3 (i.e., L3)-filtered beam-level measurement result; D), the number n of beams actually used in obtaining a cell-level measurement result; here, when the UE performs a cell reselection, a threshold for a beam selection is Threshold, a maximum quantity of beams used in obtaining the cell-level measurement result is N, and there are n (n≤N) beams whose quality is no less than the configured threshold Threshold among beams detected by the UE, then a linear mean value of signal qualities corresponding to the n best beams, whose quality is greater than Threshold, is used as the cell-level measurement result.

In the abovementioned B) and C), the beam-level measurement result includes at least one of: A), a beam-level measurement result corresponding to a serving cell; B), a beam-level measurement result corresponding to the serving cell and a neighboring cell; C), the beam-level measurement result exceeding a preset threshold; D), top k beam-level measurement results, ranked according to the measurement result, with a value exceeding a preset value; E), all detected beam-level measurement results.

Here, the beam-level measurement result includes measurement results such as reference signal received power (RSRP), and reference signal received quality (RSRQ) corresponding to a beam.

Here, the beam identifier includes at least one of: A), a beam identifier corresponding to a beam-level measurement result of a serving cell; B), a beam identifier corresponding to a beam-level measurement result of the serving cell and a neighboring cell; C), a beam identifier corresponding to the beam-level measurement result exceeding a preset threshold; D), beam identifiers corresponding to top k beam-level measurement results, ranked according to the measurement result, with a value exceeding a preset value; E), beam identifiers corresponding to all detected beam-level measurement results.

In another specific embodiment of the present disclosure, prior to the step 11, the method may include receiving configuration information transmitted by the network device.

Correspondingly, the step 11 may include: logging, by the UE, the beam-level relevant information according to configuration information transmitted by the network device. Here, the configuration information includes at least one of: A), a time interval T of logging the beam-level relevant information, that is, how often the beam-level relevant information is logged periodically; B), a valid duration of logging the beam-level relevant information, that is, a time span in which the configuration information is valid; C), a layer-3 filtering parameter corresponding to the beam-level measurement result, e.g., a filtering factor; D), a threshold value for logging the beam-level relevant information; E), a maximum value k of quantity of logged beam-level relevant information; F), beam-level relevant information to be logged corresponding to a serving cell; G), beam-level relevant information to be logged corresponding to the serving cell and a neighboring cell; H), a maximum quantity of neighboring cells to be logged.

In some embodiments of the present disclosure, the step 12 may specifically include: step 121, transmitting, by the UE, the beam-level relevant information to the network device when the UE transitions from the non-connected state to a connected state.

In a specific implementation, the step 121 may include: step 1210, transmitting the beam-level relevant information to the network device when a report request transmitted by the network device is received.

In a specific implementation, the step 121 may also include:
step 1211, transmitting to the network device an indication indicating that the beam-level relevant information is available, or reporting to the network device an indication indicating that a coverage problem is available; here, the indication indicating that a coverage problem is available is transmitted by the UE to the network device after the UE logs information about a coverage loophole; the indication indicating that a coverage problem is available is used to notify the network device that the UE has already logged the information about the coverage loophole and the information is available;
specifically, the indication indicating that the beam-level relevant information is available may be transmitted to the network device or the indication indicating that the coverage problem is available may be reported to the network device through a radio resource control (RRC) connection establishment complete message, an RRC connection recovery complete message, an RRC connection reestablishment complete message or a new RRC message;
step 1212, transmitting the beam-level relevant information to the network device when a report request transmitted by the network device in response to the indication is received.

In some embodiments of the present disclosure, the step 12 may specifically include: transmitting the beam-level relevant information to the network device through a dedicated message.

Specific implementations of the foregoing embodiment are described hereinafter with respect to specific scenarios.

### Embodiment 1

Step1: a network device configures UE in a non-connected state (including UE in an idle or inactive state) to log beam-level relevant information periodically, and configuration information includes: a time interval T, that is, how often a result is logged periodically; a valid duration of logging, which, similar to the logged MDT mechanism in LTE, defines a time span in which the configuration is valid.

Optionally, the configuration information configures a layer-3 filtering parameter corresponding to the beam-level measurement result, e.g., a filtering factor.

Optionally, the configuration information configures a threshold value for logging the beam-level relevant information.

Optionally, the configuration information configures a maximum value k of quantity of logged beam-level relevant information.

Optionally, the configuration information configures the UE to only log beam-level relevant information corresponding to a serving cell.

Optionally, the configuration information configures the UE to log beam-level relevant information corresponding to the serving cell and surrounding neighboring cells, at this time, the configuration information may further configure in advance a maximum quantity of neighboring cells to be logged.

Step 2: optionally, according to the configuration in step 1, the UE in the non-connected state performs an L3 filtering on beam-level measurement results delivered from L1, e.g., reference signal received power (RSRP) and reference signal received quality (RSRQ) corresponding to a certain beam, to obtain L3-filtered beam-level measurement results.

According to the configuration in step 1, the UE in the non-connected state periodically, at an interval of T, logs beam-level relevant information, time-related information (so that a network side may be aware of the time when the logging occurs), and location related information (so that a network side may be aware of the location where the logging occurs).

According to the configuration at the network side, or as pre-defined in a protocol, the beam-level relevant information may include only the beam-level relevant information corresponding to a current serving cell, or include the beam-level relevant information corresponding to the serving cell and surrounding neighboring cells (the maximum quantity of neighboring cells to be logged may be pre-defined, or configured in advance in step 1).

In addition to identifiers of the serving cell and/or neighboring cells, the beam-level relevant information corresponding to the serving cell and/or neighboring cells that is logged by the UE in the non-connected state includes one or more of:
a beam identifier; for example, a synchronization signal and PBCH block (SS/PBCH block, SSB) is transmitted in a beam-sweeping manner in NR, UE may obtain a beam index corresponding to the pilot (i.e., SSB index) while measuring the SSB, and the index is the beam identifier. According to the information, the network side may identify the specific SSB beam;
to support mobility of the UE in the non-connected state, a beam-level measurement result of a certain cell, measured in the cell selection or reselection procedure, provided by L1 to L3; at this time, if the UE needs to log the beam-level relevant information corresponding to the cell, the UE may directly use the beam-level measurement result provided by L1 to L3 previously;
or, according to the configuration in step 1, a obtained L3-filtered beam-level measurement result after L1 provides the beam-level measurement result to L3, and after the UE in the non-connected state performs an L3 filtering on the beam-level measurement result delivered from L1, e.g., reference signal received power (RSRP) and reference signal received quality (RSRQ) corresponding to a certain beam; at this time, if the UE needs to log the beam-level relevant information corresponding to the cell, the UE logs the L3-filtered beam-level measurement result; according to the information, the network side may obtain a beam-level channel state, so as to obtain a DL beam-level coverage state, plot a DL beam-level coverage diagram, discover a DL beam-level coverage loophole, and the like;
a value n actually used in obtaining a cell-level measurement result; according to the information, the network side may generally know whether the current configuration of cell-level measurement result obtaining based on beam-level measurement results is appropriate, for example, whether the Threshold configured by the network side for beam selection, or the maximum quantity N of beams used in obtaining the cell-level measurement result is appropriate and needs to be re-adjusted.

Here, when logging the beam-level relevant information corresponding to a certain cell, the UE may log all beam-level relevant information detected in the cell; alternatively, the logged information may be restricted, for example, the UE only logs beam-level relevant information corresponding to the beam-level measurement result exceeding a predefined threshold in the cell (the threshold may be configured in the step 1, or may be predefined), or the UE logs beam-level relevant information corresponding to top k beam-level measurement results in the cell ranked according to the measurement result (k may be configured in the step 1, or may be predefined).

Step 3: after entering the connected state, the UE reports to the network side the measurement results collected in step 1. The network side may perform DL coverage optimization according to the beam-level relevant information reported by the UE.

Possible UE reporting manners include that, 1) the UE may report to the network side the indication indicating that the beam-level relevant information is available (which may be carried in an RRC (connection) establishment complete message, an RRC (connection) recovery complete message, an RRC (connection) reestablishment complete message or a new RRC message); the network side derives from the indication that the UE has collected beam-level relevant information; the network side determines, according to its own algorithm, whether the UE should report the collected beam-level relevant information, if so, the network side requests the UE to report the collected beam-level relevant information; at the request of the network side, the UE reports the logged beam-level relevant information; 2) the network side determines, according to its own algorithm, whether the UE should report the collected results, if so, the network side requests the UE to report the collected beam-level relevant information; at the request of the network side, the UE reports the logged beam-level relevant information; 3) the UE voluntarily reports the collected beam-level relevant information to the network side through an uplink message.

Further, in the embodiment, according to the configuration in step 1, the UE in the non-connected state may periodically, at an interval of T, log a cell-level measurement result, and meanwhile log time-related information, location related information and the like.

### Embodiment 2

Step 1: when the UE in the non-connected state exits a coverage area (i.e., out of coverage), the UE processes the beam-level relevant information, and logs time-related information and location related information. The processing the beam-level relevant information includes at least one of: logging, by the UE, beam-level relevant information at this time when the UE exits the coverage area; logging, by the UE, that the UE exits the coverage area at this time when the UE exits the coverage area.

For example, when the UE in the non-connected state exits the coverage area, the UE may log a currently detectable cell and beam-level relevant information of the currently detectable cell (if there is no detectable cell, NULL may be used to identify the detectable cell and beam-level relevant information of the cell), time-related information and location related information; or, the UE may log a currently detectable cell and beam-level relevant information of the currently detectable cell (if there is no detectable cell, NULL may be used to identify the detectable cell and its beam-level relevant information of the currently detectable cell), time-related information, location related information and a 1-bit flag indicating that the UE exits the coverage area; or, the UE may not log any cell and corresponding beam-level relevant information, and only log the 1-bit flag indicating that the UE exits the coverage area.

Step 2: optionally, when the UE re-enters the coverage area, the UE processes the beam-level relevant information, and logs time-related information and location related information. The processing the beam-level relevant information includes at least one of: when the UE re-enters the coverage area after exiting the coverage area, logging, by the UE, beam-level relevant information at this time; when the UE re-enters the coverage area after exiting the coverage area, logging, by the UE, that the UE re-enters the coverage area at this time.

For example, when the UE in the non-connected state re-enters the coverage area, the UE may log a serving cell or detectable cell (including the serving cell and neighboring cell), beam-level relevant information of the cell, time-related information and location related information; or, the UE may log the serving cell or detectable cell and its beam-level relevant information of the cell, time-related information, location related information and a 1-bit flag indicating that the UE re-enters the coverage area; or, the UE may not log any cell and corresponding beam-level relevant information, and only log the 1-bit flag indicating that the UE re-enters the coverage area.

In the embodiment, the content of the beam-level relevant information in the above step 1 and step 2 is the same as that in the step 2 of embodiment 1.

In the step 1, the UE may log, in an incremental manner, a total number of times the UE exits the coverage area. For example, if the UE exits the coverage area at time instants T1, T2 (T2>T1) and T3 (T3>T2), the UE logs its exiting the coverage area at each of the time instants T1, T2 and T3.

For example, at the time instant T1, the UE logs the beam-level relevant information, and/or exiting the coverage area once, and/or location information, and/or time information; at the time instant T2, the UE logs the beam-level relevant information, and/or exiting the coverage area twice, and/or location information, and/or time information; at the time instant T3, the UE logs the beam-level relevant information, and/or exiting the coverage area three times.

In subsequent reporting to the network side, the UE may only report the result of the time instant T3, or the UE may report the results of the time instants T1, T2 and T3.

In the same way, in the step 2, the UE may log, in an incremental manner, a number of times the UE re-enters the coverage area after exiting the coverage area.

Step 3: the UE reports the collected measurement results to the network side after entering the connected state. The network side may discover a coverage loophole according to information reported by the UE, to perform DL coverage optimization.

Possible UE reporting manners include that, 1) the UE may first report to the network side the indication indicating that a coverage problem is available (which may be carried in an RRC (connection) establishment complete message, an RRC (connection) recovery complete message, an RRC (connection) reestablishment complete message or a new RRC message); the network side derives from the indication that the UE has collected results about exiting the coverage area and/or re-entering the coverage area; the network side determines, according to its own algorithm, whether the UE should report the collected measurement results, if so, the network side requests the UE to report the collected results; at the request of the network side, the UE reports the logged results; 2) the network side voluntarily requests the UE to report collected results about exiting the coverage area and/or re-entering the coverage area; at the request of the network side, the UE reports the logged results; 3) the UE voluntarily reports the collected results to the network side through an uplink message.

Here, the example in step 3 is a case in which the UE separately reports the results about exiting the coverage area and/or re-entering the coverage area to the network side. Sometimes, an embodiment 3 may be a special example of the process of the embodiment 1, in this case, the step 3 in the embodiment 3 is the same as the step 3 of the embodiment 1, i.e., the UE reports the results about exiting the coverage area and/or re-entering the coverage area along with other collected results about normal coverage to the network side.

In the above embodiments of the present disclosure, UE in the non-connected state processes beam-level relevant information, to assist the network side in performing DL coverage optimization, especially the beam-level DL coverage optimization.

Some embodiments of the present disclosure further provide an information receiving method. The method is applied to a network device and includes: receiving the beam-level relevant information reported by the UE in a non-connected state.

Prior to the receiving the beam-level relevant information reported by the UE in the non-connected state, the information receiving method further includes at least one of: transmitting configuration information to UE; transmitting a report request for beam-level relevant information to UE; receiving an indication transmitted by the UE indicating that the beam-level relevant information is available or an indication reported by the UE indicating that a coverage problem is available.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged.

It is noted, all implementations of the UE side method are applicable to embodiments at the network device side, and may achieve the same technical effects.

As shown in Fig.2, some embodiments of the present disclosure further provide UE 20, including a processor 22, a transceiver 21, a memory 23 and a program stored in the memory and executable by the processor, wherein the processor is configured to execute the program to implement: logging beam-level relevant information; the transceiver 21 is configured to report the beam-level relevant information to a network device.

The processor 22 is specifically configured to implement at least one of: logging the beam-level relevant information periodically; logging the beam-level relevant information when the UE exits a coverage area; logging the beam-level relevant information when the UE re-enters the coverage area after exiting the coverage area.

The logging the beam-level relevant information when the UE exits the coverage area includes at least one of: logging a number of times the UE exits the coverage area, logging a time when the UE exits the coverage area, and logging flag information about the UE's exiting the coverage area.

The logging the beam-level relevant information when the UE re-enters the coverage area after exiting the coverage area includes at least one of: logging a number of times the UE re-enters the coverage area after exiting the coverage area, logging a time when the UE re-enters the coverage area, and logging flag information about the UE's re-entering the coverage area, a serving cell or detectable cell, and beam-level relevant information of the serving cell or detectable cell.

The beam-level relevant information includes at least one of: a beam identifier; a beam-level measurement result provided by layer-1; a layer-3-filtered beam-level measurement result; the number n of beams actually used in obtaining a cell-level measurement result.

The beam-level measurement result includes at least one of: a beam-level measurement result corresponding to a serving cell; a beam-level measurement result corresponding to the serving cell and a neighboring cell; the beam-level measurement result exceeding a preset threshold; top k beam-level measurement results, ranked according to the measurement result, with a value exceeding a preset value; all detected beam-level measurement results.

The beam identifier includes at least one of: a beam identifier corresponding to a beam-level measurement result of a serving cell; a beam identifier corresponding to a beam-level measurement result of the serving cell and a neighboring cell; a beam identifier corresponding to the beam-level measurement result exceeding a preset threshold; beam identifiers corresponding to top k beam-level measurement results, ranked according to the measurement result, with a value exceeding a preset value; beam identifiers corresponding to all detected beam-level measurement results.

The transceiver 21 is configured to receive the configuration information transmitted by the network device; the processor is configured to log the beam-level relevant information according to the configuration information of the network device.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged.

The transceiver is configured to transmit the beam-level relevant information to the network device when the UE transitions from the non-connected state to a connected state.

The transceiver 21 is configured to transmit the beam-level relevant information to the network device when a report request transmitted by the network device is received; or, the transceiver 21 is configured to transmit to the network device an indication indicating that the beam-level relevant information is available, or report to the network device an indication indicating that a coverage problem is available; and transmit the beam-level relevant information to the network device when a report request transmitted by the network device in response to the indication is received.

When transmitting to the network device the indication indicating that the beam-level relevant information is available or reporting to the network device the indication indicating that the coverage problem is available, the transceiver 21 is configured to transmit to the network device the indication indicating that the beam-level relevant information is available or report to the network device the indication indicating that the coverage problem is available through a radio resource control (RRC) connection establishment complete message, an RRC connection recovery complete message, an RRC connection reestablishment complete message or a new RRC message.

All implementations of the information reporting method are applicable to embodiments of the UE, and may achieve the same technical effects. In the embodiment, the memory 23, the transceiver 21 and the processor 22 may be connected to each other through a bus interface, and the transceiver 21 and the memory 23 may be connected through the bus interface, a function of the transceiver 21 may be implemented by the processor 22, and a function of the processor 22 may also be implemented by the transceiver 21. The memory 23 and the processor 22 may also be separated, e.g., reside in different devices.

Some embodiments of the present disclosure further provide an information reporting apparatus, applied to UE in a non-connected state, including: a processing module, configured to log beam-level relevant information; a transceiver module, configured to report the beam-level relevant information to a network device.

The processing module is specifically configured to implement at least one of: logging the beam-level relevant information periodically; logging the beam-level relevant information when the UE exits a coverage area; logging the beam-level relevant information when the UE re-enters the coverage area after exiting the coverage area.

The processing module is specifically configured to implement at least one of: logging the beam-level relevant information periodically; logging the beam-level relevant information when the UE exits a coverage area; logging the beam-level relevant information when the UE re-enters the coverage area after exiting the coverage area.

The logging the beam-level relevant information when the UE exits the coverage area includes at least one of: logging a number of times the UE exits the coverage area, logging a time when the UE exits the coverage area, and logging flag information about the UE's exiting the coverage area.

The logging the beam-level relevant information when the UE re-enters the coverage area after exiting the coverage area includes at least one of: logging a number of times the UE re-enters the coverage area after exiting the coverage area, logging a time when the UE re-enters the coverage area, and logging flag information about the UE's re-entering the coverage area, a serving cell or detectable cell, and beam-level relevant information of the serving cell or detectable cell.

The beam-level relevant information includes at least one of: a beam identifier; a beam-level measurement result provided by layer-1; a layer-3-filtered beam-level measurement result; the number n of beams actually used in obtaining a cell-level measurement result.

The beam-level measurement result includes at least one of: a beam-level measurement result corresponding to a serving cell; a beam-level measurement result corresponding to the serving cell and a neighboring cell; the beam-level measurement result exceeding a preset threshold; top k beam-level measurement results, ranked according to the measurement result, with a value exceeding a preset value; all detected beam-level measurement results.

The beam identifier includes at least one of: a beam identifier corresponding to a beam-level measurement result of a serving cell; a beam identifier corresponding to a beam-level measurement result of the serving cell and a neighboring cell; a beam identifier corresponding to the beam-level measurement result exceeding a preset threshold; beam identifiers corresponding to top k beam-level measurement results, ranked according to the measurement result, with a value exceeding a preset value; beam identifiers corresponding to all detected beam-level measurement results.

The transceiver module is further configured to receive configuration information transmitted by the network device; the processing module is specifically configured to log the beam-level relevant information according to configuration information of the network device.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged.

The transceiver module is specifically configured to transmit the beam-level relevant information to the network device when the UE transitions from the non-connected state to a connected state.

The transceiver module is specifically configured to: transmit the beam-level relevant information to the network device when a report request transmitted by the network device is received; or, transmit to the network device an indication indicating that the beam-level relevant information is available, or report to the network device an indication indicating that a coverage problem is available; and transmit the beam-level relevant information to the network device when a report request transmitted by the network device in response to the indication is received.

The transceiver module is specifically configured to: transmit the beam-level relevant information to the network device when a report request transmitted by the network device is received; or, transmit to the network device an indication indicating that the beam-level relevant information is available, or report to the network device an indication indicating that a coverage problem is available; and transmit the beam-level relevant information to the network device when a report request transmitted by the network device in response to the indication is received.

When transmitting to the network device an indication indicating that the beam-level relevant information is available, or reporting to the network device an indication indicating that a coverage problem is available, the transceiver module is specifically configured to: transmit to the network device the indication indicating that the beam-level relevant information is available or report to the network device the indication indicating that the coverage problem is available through a radio resource control (RRC) connection establishment complete message, an RRC connection recovery complete message, an RRC connection reestablishment complete message or a new RRC message.

It is noted, all implementations of the UE side method are applicable to embodiments of the apparatus, and may achieve the same technical effects.

Some embodiments of the present disclosure further provide a network device, including a processor, a transceiver, a memory and a program stored in the memory and executable by the processor, wherein the processor is configured to execute the program to implement at least one of: transmitting configuration information to UE, transmitting a report request for beam-level relevant information to UE, receiving an indication transmitted by the UE indicating that the beam-level relevant information is available or an indication reported by the UE indicating that a coverage problem is available; and the processor is configured to execute the program to implement: receiving the beam-level relevant information reported by the UE in a non-connected state.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged.

All implementations of the information receiving method are applicable to embodiments of the network device, and may achieve the same technical effects. Further, the network device may include the transceiver and the memory, wherein the transceiver may be connected to the processor through a bus interface, and the transceiver may be connected to the memory through the bus interface, a function of the transceiver may be implemented by the processor, and a function of the processor may also be implemented by the transceiver. The memory and the processor may also be separated, e.g., reside in different devices.

Some embodiments of the present disclosure further provide an information receiving apparatus, applied to a network device, including: a transceiver module, configured to implement at least one of: transmitting configuration information to UE, transmitting a report request for beam-level relevant information to UE, receiving an indication transmitted by the UE indicating that the beam-level relevant information is available or an indication reported by the UE indicating that a coverage problem is available.

The transceiver module is further configured to receive the beam-level relevant information reported by the UE in a non-connected state.

The configuration information includes at least one of: a time interval T of logging the beam-level relevant information; a valid duration of logging the beam-level relevant information; a layer-3 filtering parameter corresponding to the beam-level measurement result; a threshold value for logging the beam-level relevant information; a maximum value k of quantity of logged beam-level relevant information; beam-level relevant information to be logged corresponding to a serving cell; beam-level relevant information to be logged corresponding to the serving cell and a neighboring cell; a maximum quantity of neighboring cells to be logged. It is noted, all implementations of the network device side method are applicable to embodiments of the apparatus, and may achieve the same technical effects. The network device may be a network device such as a base station.

Some embodiments of the present disclosure further provide a computer storage medium including an instruction, wherein the instruction is configured to be executed by a computer to cause the computer to implement the foregoing UE side method as illustrated in Fig.1 or the foregoing network device side method.

A person skilled in the art may be aware that, the exemplary units and algorithm steps described in connection with the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the disclosure.

It may be clearly understood by a person skilled in the art that, for ease of description and conciseness, for a detailed working process of the foregoing system, apparatus, and unit, reference may be made to a corresponding process in the foregoing method embodiments, and details are not described herein again.

In the several embodiments provided in the present application, it should be understood that the disclosed device and method may be implemented in other manners. For example, the described device embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electric, mechanical, or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit. If the functions are implemented in a form of a software functional unit and sold or used as an independent product, the functions may be stored in a computer-readable storage medium. Based on such an understanding, the technical solutions of the present disclosure essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the disclosure. The foregoing storage medium includes any medium that can store program code, such as a universal serial bus (USB) flash drive, a removable hard disk, an ROM, an RAM, a magnetic disk, or an optical disc.

In addition, it should be noted that in the apparatus and the method of the present disclosure, apparently, parts or steps may be divided and/or re-combined. The divisions and/or re-combinations should be regarded as equivalent solutions of the present disclosure. Moreover, steps of the above series of processes may be performed naturally in a time order of description. However, the performing sequence is not limited to the time order. Some steps may be performed in parallel or independently. Persons of ordinary skill in the art would appreciate that all or any steps or parts of the methods and apparatuses of the present disclosure may be implemented in any computing apparatus (including a processor, a storage medium or the like) or a network of computing apparatuses in hardware, firmware, software or a combination thereof, and this can be achieved by persons of ordinary skill in the art by using their basic programming skill after reading the description of the present disclosure.

Thus, the object of the present disclosure may also be implemented by running a program or a set of programs on any computing apparatus. The computing apparatus may be a known general purpose apparatus. Thus, the object of the present disclosure may also be implemented merely by providing a program product which contains program code for implementing the methods or apparatuses. That is, such program product also constitutes the present disclosure, and a storage medium in which such a program product is stored also constitutes the present disclosure. Apparently, the storage medium may be any known storage medium or any storage medium that will be developed in the future. It should also be noted that, in the apparatuses and methods of the present disclosure, apparently, parts or steps may be divided and/or re-combined. The divisions and/or re-combinations should be regarded as equivalent solutions of the present disclosure. Moreover, steps of the foregoing series of processes may be performed naturally in a time order of description, however the performing sequence is not limited to the time order. Some steps may be performed in parallel or independently.

The foregoing describes optional implementations of the present disclosure. It should be noted that for a person of ordinary skill in the art, several improvements and modifications may further be made without departing from the principle of the present disclosure. These improvements and modifications should also be deemed as falling within the scope of the present disclosure.

## Claims

1. An information reporting method, applied to user equipment (UE), comprising:
logging, by the UE in a non-connected state, beam-level relevant information;
reporting, by the UE, the beam-level relevant information to a network device.

2. The information reporting method according to claim 1, wherein the logging, by the UE, the beam-level relevant information comprises at least one of:
logging, by the UE, the beam-level relevant information periodically;
logging, by the UE, the beam-level relevant information when the UE exits a coverage area;
logging, by the UE, the beam-level relevant information when the UE re-enters the coverage area after exiting the coverage area.

3. The information reporting method according to claim 2, wherein,
the logging, by the UE, the beam-level relevant information when the UE exits the coverage area comprises at least one of: logging a number of times the UE exits the coverage area, logging a time when the UE exits the coverage area, and logging flag information about the UE's exiting the coverage area;
the logging, by the UE, the beam-level relevant information when the UE re-enters the coverage area after exiting the coverage area comprises at least one of: logging a number of times the UE re-enters the coverage area after exiting the coverage area, logging a time when the UE re-enters the coverage area, and logging flag information about the UE's re-entering the coverage area, a serving cell or detectable cell, and beam-level relevant information of the serving cell or detectable cell.

4. The information reporting method according to claim 1, wherein the beam-level relevant information comprises at least one of:
a beam identifier;
a beam-level measurement result provided by layer-1;
a layer-3-filtered beam-level measurement result;
the number n of beams actually used in obtaining a cell-level measurement result.

5. The information reporting method according to claim 4, wherein the beam-level measurement result comprises at least one of:
a beam-level measurement result corresponding to a serving cell;
a beam-level measurement result corresponding to the serving cell and a neighboring cell;
the beam-level measurement result exceeding a preset threshold;
top k beam-level measurement results, ranked according to the measurement result, with a value exceeding a preset value;
all detected beam-level measurement results.

6. The information reporting method according to claim 4, wherein the beam identifier comprises at least one of:
a beam identifier corresponding to a beam-level measurement result of a serving cell;
a beam identifier corresponding to a beam-level measurement result of the serving cell and a neighboring cell;
a beam identifier corresponding to the beam-level measurement result exceeding a preset threshold;
beam identifiers corresponding to top k beam-level measurement results, ranked according to the measurement result, with a value exceeding a preset value;
beam identifiers corresponding to all detected beam-level measurement results.

7. The information reporting method according to claim 1, wherein the logging, by the UE, the beam-level relevant information comprises:
logging, by the UE, the beam-level relevant information according to configuration information of the network device.

8. The information reporting method according to claim 7, wherein the configuration information comprises at least one of:
a time interval T of logging the beam-level relevant information;
a valid duration of logging the beam-level relevant information;
a layer-3 filtering parameter corresponding to the beam-level measurement result;
a threshold value for logging the beam-level relevant information;
a maximum value k of quantity of logged beam-level relevant information;
beam-level relevant information to be logged corresponding to a serving cell;
beam-level relevant information to be logged corresponding to the serving cell and a neighboring cell;
a maximum quantity of neighboring cells to be logged.

9. The information reporting method according to claim 1, wherein the reporting, by the UE, the beam-level relevant information to the network device comprises:
transmitting, by the UE, the beam-level relevant information to the network device when the UE transitions from the non-connected state to a connected state.

10. The information reporting method according to claim 9, wherein the transmitting the beam-level relevant information to the network device comprises:
transmitting the beam-level relevant information to the network device when a report request transmitted by the network device is received; or,
transmitting to the network device an indication indicating that the beam-level relevant information is available, or reporting to the network device an indication indicating that a coverage problem is available; and transmitting the beam-level relevant information to the network device when a report request transmitted by the network device in response to the indication is received.

11. The information reporting method according to claim 9, wherein transmitting to the network device the indication indicating that the beam-level relevant information is available, or reporting to the network device the indication indicating that the coverage problem is available comprises:
transmitting to the network device the indication indicating that the beam-level relevant information is available or reporting to the network device the indication indicating that the coverage problem is available through a radio resource control (RRC) connection establishment complete message, an RRC connection recovery complete message, an RRC connection reestablishment complete message or a new RRC message.

12. An information receiving method, applied to a network device, comprising:
transmitting configuration information to UE, transmitting a report request for beam-level relevant information to UE, and/or receiving an indication transmitted by the UE indicating that the beam-level relevant information is available or an indication reported by the UE indicating that a coverage problem is available;
receiving the beam-level relevant information reported by the UE in a non-connected state.

13. The information receiving method according to claim 12, wherein the configuration information comprises at least one of:
a time interval T of logging the beam-level relevant information;
a valid duration of logging the beam-level relevant information;
a layer-3 filtering parameter corresponding to the beam-level measurement result;
a threshold value for logging the beam-level relevant information;
a maximum value k of quantity of logged beam-level relevant information;
beam-level relevant information to be logged corresponding to a serving cell;
beam-level relevant information to be logged corresponding to the serving cell and a neighboring cell;
a maximum quantity of neighboring cells to be logged.

14. User equipment (UE), comprising a processor, a transceiver, a memory and a program stored in the memory and executable by the processor, wherein the processor is configured to execute the program to implement: logging beam-level relevant information; the transceiver is configured to report the beam-level relevant information to a network device.

15. The UE according to claim 14, wherein the processor is configured to execute the program to specifically implement at least one of following:
logging the beam-level relevant information periodically;
logging the beam-level relevant information when the UE exits a coverage area;
logging the beam-level relevant information when the UE re-enters the coverage area after exiting the coverage area.

16. The UE according to claim 15, wherein,
the logging the beam-level relevant information when the UE exits the coverage area comprises at least one of: logging a number of times the UE exits the coverage area, logging a time when the UE exits the coverage area, and logging flag information about the UE's exiting the coverage area;
the logging the beam-level relevant information when the UE re-enters the coverage area after exiting the coverage area comprises at least one of: logging a number of times the UE re-enters the coverage area after exiting the coverage area, logging a time when the UE re-enters the coverage area, and logging flag information about the UE's re-entering the coverage area, a serving cell or detectable cell, and beam-level relevant information of the serving cell or detectable cell.

17. The UE according to claim 14, wherein the beam-level relevant information comprises at least one of:
a beam identifier;
a beam-level measurement result provided by layer-1;
a layer-3-filtered beam-level measurement result;
the number n of beams actually used in obtaining a cell-level measurement result.

18. The UE according to claim 17, wherein the beam-level measurement result comprises at least one of:
a beam-level measurement result corresponding to a serving cell;
a beam-level measurement result corresponding to the serving cell and a neighboring cell;
the beam-level measurement result exceeding a preset threshold;
top k beam-level measurement results, ranked according to the measurement result, with a value exceeding a preset value;
all detected beam-level measurement results.

19. The UE according to claim 17, wherein the beam identifier comprises at least one of:
a beam identifier corresponding to a beam-level measurement result of a serving cell;
a beam identifier corresponding to a beam-level measurement result of the serving cell and a neighboring cell;
a beam identifier corresponding to the beam-level measurement result exceeding a preset threshold;
beam identifiers corresponding to top k beam-level measurement results, ranked according to the measurement result, with a value exceeding a preset value;
beam identifiers corresponding to all detected beam-level measurement results.

20. The UE according to claim 14, wherein the transceiver is configured to receive the configuration information transmitted by the network device;
the processor is configured to log the beam-level relevant information according to the configuration information of the network device.

21. The UE according to claim 20, wherein the configuration information comprises at least one of:
a time interval T of logging the beam-level relevant information;
a valid duration of logging the beam-level relevant information;
a layer-3 filtering parameter corresponding to the beam-level measurement result;
a threshold value for logging the beam-level relevant information;
a maximum value k of quantity of logged beam-level relevant information;
beam-level relevant information to be logged corresponding to a serving cell;
beam-level relevant information to be logged corresponding to the serving cell and a neighboring cell;
a maximum quantity of neighboring cells to be logged.

22. The UE according to claim 14, wherein the transceiver is configured to transmit the beam-level relevant information to the network device when the UE transitions from the non-connected state to a connected state.

23. The UE according to claim 22, wherein the transceiver is configured to transmit the beam-level relevant information to the network device when a report request transmitted by the network device is received; or,
the transceiver is configured to transmit to the network device an indication indicating that the beam-level relevant information is available, or report to the network device an indication indicating that a coverage problem is available; and transmit the beam-level relevant information to the network device when a report request transmitted by the network device in response to the indication is received.

24. The UE according to claim 23, wherein when transmitting to the network device the indication indicating that the beam-level relevant information is available or reporting to the network device the indication indicating that the coverage problem is available, the transceiver is configured to transmit to the network device the indication indicating that the beam-level relevant information is available or report to the network device the indication indicating that the coverage problem is available through a radio resource control (RRC) connection establishment complete message, an RRC connection recovery complete message, an RRC connection reestablishment complete message or a new RRC message.

25. An information reporting apparatus, applied to UE in a non-connected state, comprising:
a processing module, configured to log beam-level relevant information;
a transceiver module, configured to report the beam-level relevant information to a network device.

26. The information reporting apparatus according to claim 25, wherein the processing module is specifically configured to implement at least one of:
logging the beam-level relevant information periodically;
logging the beam-level relevant information when the UE exits a coverage area;
logging the beam-level relevant information when the UE re-enters the coverage area after exiting the coverage area.

27. The information reporting apparatus according to claim 25, wherein the transceiver module is specifically configured to transmit the beam-level relevant information to the network device when the UE transitions from the non-connected state to a connected state.

28. The information reporting apparatus according to claim 27, wherein the transceiver module is specifically configured to:
transmit the beam-level relevant information to the network device when a report request transmitted by the network device is received; or,
transmit to the network device an indication indicating that the beam-level relevant information is available, or report to the network device an indication indicating that a coverage problem is available; and transmit the beam-level relevant information to the network device when a report request transmitted by the network device in response to the indication is received.

29. A network device, comprising a processor, a transceiver, a memory and a program stored in the memory and executable by the processor, wherein the processor is configured to execute the program to implement at least one of: transmitting configuration information to UE, transmitting a report request for beam-level relevant information to UE, receiving an indication transmitted by the UE indicating that the beam-level relevant information is available or an indication reported by the UE indicating that a coverage problem is available; and
the processor is configured to execute the program to implement: receiving the beam-level relevant information reported by the UE in a non-connected state.

30. The network device according to claim 29, wherein the configuration information comprises at least one of:
a time interval T of logging the beam-level relevant information;
a valid duration of logging the beam-level relevant information;
a layer-3 filtering parameter corresponding to the beam-level measurement result;
a threshold value for logging the beam-level relevant information;
a maximum value k of quantity of logged beam-level relevant information;
beam-level relevant information to be logged corresponding to a serving cell;
beam-level relevant information to be logged corresponding to the serving cell and a neighboring cell;
a maximum quantity of neighboring cells to be logged.

31. An information receiving apparatus, applied to a network device, comprising:
a transceiver module, configured to implement at least one of: transmitting configuration information to UE, transmitting a report request for beam-level relevant information to UE, receiving an indication transmitted by the UE indicating that the beam-level relevant information is available or an indication reported by the UE indicating that a coverage problem is available;
wherein the transceiver module is further configured to receive the beam-level relevant information reported by the UE in a non-connected state.

32. A computer storage medium comprising an instruction, wherein the instruction is configured to be executed by a computer to cause the computer to implement the method according to any one of claims 1 to 11 or the method according to any one of claims 12 to 13.
